# EUROPEAN PATENT SPECIFICATION

(11) **EP 0 835 602 B1**
(45) Date of publication and mention of the grant of the patent: **19.12.2001**
(21) Application number: 97117526.0
(22) Date of filing: 10.10.1997
(51) Int. Cl.: A01C 17/00, A01C 15/00

(54) **Method of spreading flowable material on a surface, and spreading apparatus for carrying out same**
Streuverfahren und Vorrichtung um dieses aus zu führen
Méthode d'épandage de matières fluides et épandeur pour exécuter celle-ci

(30) Priority: 11.10.1996 DK 112296
(43) Date of publication of application: 15.04.1998
(73) Proprietor: A.P. Laursen A/S, DK-7171 Uldum (DK)
(72) Inventor: Iversen, Morten Dall, 6000 Kolding (DK)
(74) Representative: Roerboel, Leif

(56) References cited:
- EP-A- 0 532 055
- DE-A- 3 917 210
- FR-A- 2 028 506
- FR-A- 2 496 390

## Description

### TECHNICAL FIELD

The present invention relates to a method of spreading flowable material on a surface and a spreading apparatus for carrying out same.

The flowable material is preferably constituted by fertilizer, e.g. commercial fertilizer or the like, normally occurring in granular or powder form. The material is spread over a surface, normally an earth surface, which is either sowed or intended to be sowed in a subsequent treatment step. The spreading is carried out by means of a spreading apparatus being of the kind comprising a holding frame carrying a spreading device comprising at least two rotatable spreader disks each provided with one or more spreader vanes, and being operated by a transmission device, as well as a container for the flowable material.

### BACKGROUND ART

Today, mainly spreading apparatuses with two rotatable spreader disks are used for the spreading of flowable material. From each of these spreader disks the flowable material is ejected mainly backwards and to the sides seen in relation to the direction of forward movement by means of the spreader vanes, and with a suitable shield on part of the periphery of the spreader disks the ejected material will land or end in separate sectors or covering areas on the earth surface. Traditionally, these spreading apparatuses can be divided up into to main groups, viz. the kind in which the spreader disks, as seen from the rear and in the direction of forward movement, are rotating towards each other, and the kind in which the spreader disks rotate away from each other. The former kind produces an integral spreading pattern with a high degree of overlapping of the covering areas of the two spreader disks and is called the broad spreading kind. In contrast, the latter kind produces an integral spreading pattern in which there is only a relatively narrow overlapping of the covering areas of the spreader disks, and it is therefore called the narrow spreading kind.

To a large extent both types of spreading apparatuses are designed to give varied spreading patterns, at the same time normally being relatively homogeneous, uniform and symmetrical, when viewed in a plane at right angles to the direction of forward movement. When used for edge spreading, e.g. with a spreading pattern in which the spreading on one side of the spreading apparatus deliberately is to be made unsymmetrical, i.e. where it is desired that the throwing width shall be smaller or shorter, both traditional types do, however, require the use of relatively complicated and cost-demanding ancillary equipment. E.g. the so-called spreader shields can be used, which are introduced in the vicinity of one of the spreader disks, and hereby the flowable material is braked so that its path of ejection is shortened, whereby the spreading or throwing width becomes smaller, or the spreading apparatus itself is equipped with e.g. hydraulically acting ancillary equipment designed in such a manner that the complete spreading device can be pivoted and adjusted relative to the remaining part of the spreading apparatus, so that the device gets another angle relative to the earth surface on which fertilizer is to be spread, whereby again another spreading width than the normal one is obtained. Such equipment has e.g. been described in Danish Patent Application No. 0475/85.

### DISCLOSURE OF THE INVENTION

On the background of the above, it is the object of the invention to provide a method and a spreading apparatus for spreading flowable material with which the above-mentioned disadvantages and in particular the great cost are avoided, and which in a simple manner can be used in connection with different spreading patterns, including in particular the most common spreading patterns, e.g. broad spreading, narrow spreading and edge spreading.

This object is achieved with a method as set forth in the introductory part of claim 1, and which according to the present invention is further characterized in that during the spreading operation a spreading apparatus is used carrying a spreader device comprising at least two rotatable spreader disks which, preferably in pairs and optionally, are set to rotate towards each other and away from each other or in the same direction, respectively.

By in this way combining the features of the mode of operation of the traditional spreading apparatuses, the possibility of altering the spreading pattern of the spreading apparatus is surprisingly achieved in a rapid and simple manner by simply altering the direction of rotation of the spreader disks.

By letting the rotatable spreader disks preferably rotate towards each other in broad spreading and rotate away from each other in narrow spreading as set forth in claim 2, the possibility of using the best spreading characteristics from the spreading patterns of the prior spreading apparatuses in one single spreading apparatus is achieved.

As set forth in claim 3, a still better spreading pattern or a still better spreading characteristic is achieved, if flowable material is delivered from the supply container to only one of the said spreader disks, being arranged in pairs, as hereby a clear reduction in the total spreading pattern from the spreading apparatus is achieved. Immediately, a halving of the ejected amount of flowable material is achieved, just as the ejection is delimited to a single sector or to a single covering area.

By letting the spreader disks rotate away from each other or in the same direction, in particular when used for edge spreading, as set forth in claim 4, the best exploitation of the spreading apparatus is achieved, as in this case the technology known from the narrow spreading kind of spreading apparatuses is used, which as mentioned initially gives a relatively narrow spreading pattern, in which the individual spreader disk normally covers a spreading sector of appr. 90°, in contrast to what is the case when used for broad spreading wherein a spreading sector of up to 180° of each spreader disk is covered.

By delivering flowable material to only the one of the spreader disks being closest to the area in which edge spreading is to take place, as set forth in claim 5, a spreading pattern can be achieved, which is very close to the spreading pattern desired in the edge spreading area, and the spreading pattern can be further optimized, when the spreader disks, as stated, rotate away from each other, still as seen in the direction of forward movement.

By delivering flowable material to only the one of the spreading disks being most distant from the area in which fertilizer is to be spread, as set forth in claim 6, a spreading pattern can be achieved which is different from the one which can be achieved according to the invention as set forth in claim 5, which may be desirable in some situations, and still it may possibly be further optimized by letting the spreader disks rotate away from each other.

By, as set forth in claim 7, operating the one spreader disk mentioned in claim 6 in the broad-spreading mode and placing a guide plate in the immediate vicinity of its periphery so as to limit the spreading on the side closest to the edge concerned, it is possible to achieve a very accurate delimitation of the spreading adjacent to a critical area, such as a stream not to be polluted.

The above-mentioned object is moreover achieved by a spreading apparatus as set forth in the introductory part of claim 8 and, according to the present invention, further characterized in that the spreading apparatus carries a spreading device comprising at least two rotatable spreader disks which, preferably in pairs and optionally, can be set to rotate towards each other and away from each other or in the same direction, respectively, by means of a shift mechanism reversing the direction of rotation of one or both of the spreader disks.

By using a shift mechanism immediately reversing the direction of rotation of one or both of the spreader disks in this manner, the advantages of each of the different spreading patterns of the known types of spreading apparatuses can be achieved in a surprisingly simple manner.

By letting the shift mechanism be constituted by either an internal or an external transmission unit in relation to the existing transmission device, as set forth in claim 9, an increased applicability is achieved, as the user has the possibility of choosing between a replacement of or an addition to the existing transmission.

By letting at least one of the spreader vanes be designed for broad spreading as well as for narrow spreading, as set forth in claim 10, a complete spreading apparatus is achieved, which is easy and simple to switch to broad spreading, narrow spreading as well as edge spreading.

By using spreader vanes which when used for edge spreading are replaced with special edge-spreading vanes, as set forth in claim 11, an optimum spreading pattern is achieved when used for edge spreading, and in particular if the spreader vanes are replaced with edge-spreading vanes on only the spreader disk or disks to which flowable material is delivered in the optimum edge spreading.

By using a guide plate as set forth in claim 12, the spreading apparatus according to the invention can be further improved by introducing the additional adjustable guide plate in the immediate vicinity of the one of the spreader disks with spreader vanes, when fertilizer is to be spread by of edge spreading. The guide plate itself can be placed e.g. end to end with the above-mentioned shield and may be U-shaped or L-shaped in cross-section or simply be plane. Hereby the ejection of the material is delimited, and the throwing width is thus further reduced.

If the apparatus is of the kind having a rotatable stirrer coupled to the shaft of and placed in the supply path of each spreader disk, crushing or other damage to the flowable material, e.g. fertilizer, caused by rotation of a stirrer in a blocked supply duct for flowable material, can be avoided in an arrangement, set forth in claim 13, in which each stirrer is connected through the respective shaft through a one-way clutch active solely in the direction of rotation, in which the spreader disk concerned rotates, as seen from behind, away from the other spreader disk.

### BRIEF DESCRIPTION OF THE DRAWINGS

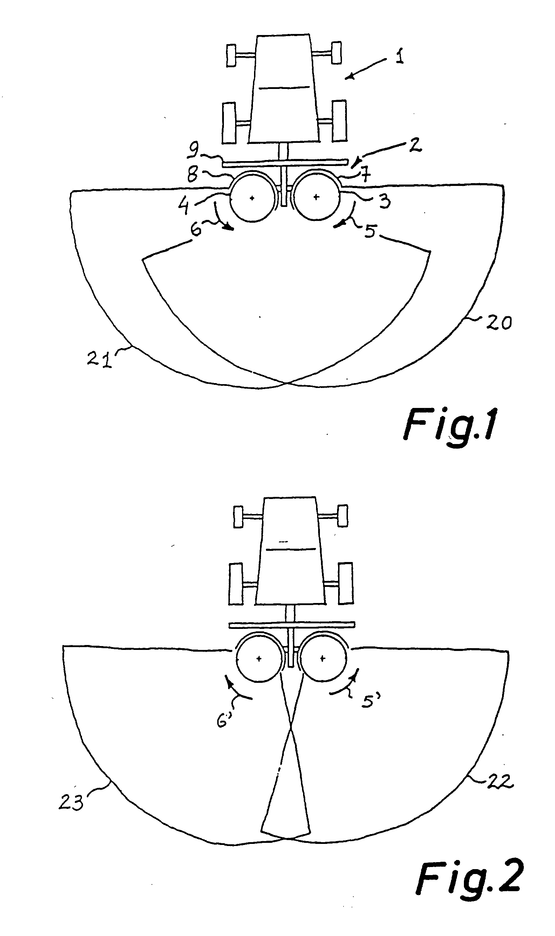

In the following detailed part of the present description, the invention will be explained in more detail with reference to the exemplary embodiments shown in the drawings, in which
Figure 1 diagrammatically shows the normal spreading pattern, also designated "broad spreading", in which the spreading sectors for each spreader disk cover approximately 180°, for a spreading apparatus in which the spreader disks rotate towards each other as seen from the rear and in the direction of forward movement,
Figure 2 diagrammatically shows the normal spreading pattern, also designated "narrow spreading", in which each spreader disk covers a spreading sector of approximately 90°, for a spreading apparatus in which the spreader disks rotate away from each other as seen from the rear and in the direction of forward movement, and

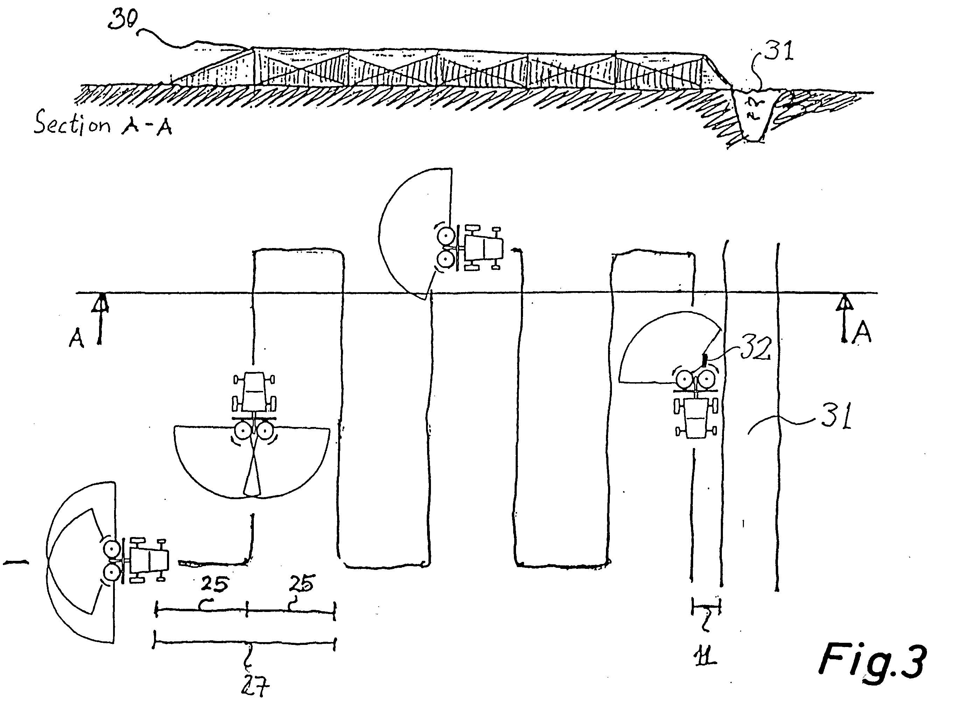

Figure 3 diagrammatically shows a part of a spreading map for a spreading apparatus when used for broad spreading and narrow spreading, as well as for edge spreading according to the invention.

### DESCRIPTION OF THE PREFERRED EMBODIMENT

Figure 1 shows a spreading apparatus generally designated 2 driven by a traction device 1, commonly constituted by a tractor or similar vehicle with suitable power-transmission means (not shown).

The spreading apparatus 2 comprises a holding frame 9 and a spreading device comprising two rotatable spreader disks 3,4, as well as two shields 7,8, each embracing a respective spreader disk. The shields 7,8 may be U-shaped or L-shaped in cross-section with the inside of the profile facing the spreader disk. The rotatable spreader disks 3,4 are supplied with flowable material from a supply container (not shown) that may be provided with adjustable and closeable outlet openings above each spreader disk.

Via the power-transmission means between the traction device 1 and the spreading apparatus 2 mentioned above, the spreader disks 3,4 are caused to rotate about their axes of rotation 5,6. Normally, each spreader disk 3,4 is mounted on a respective rotary shaft, operatively connected to the power-transmission means mentioned via a gear box (not shown) or some other kind of transmission device (e.g. a drive system comprising belts or toothed belts).

The directions of rotation 5,6 for the spreader disk 3,4 can be reversed by means of a shift mechanism, either together or individually, possibly for one spreader disk only. The shift mechanism (not shown) can consist of a transmission unit connected to the existing power-transmission device, either as an internal integral part or as an external extra component. Preferably, it can comprise a gear unit which optionally can constitute an internal integral part of the gear box normally used, or the gear unit can constitute an external extra gear component. In a specific embodiment of the invention this shift mechanism can be restricted to only influencing one of the directions of rotation of the spreader disks.

In the exemplary embodiment as shown, the two spreader disks 3,4 rotate in opposite directions, thus the spreader disk 3 rotates in the clockwise direction 5 and the spreader disk 4 rotates in the anti-clockwise direction 6. Thus, seen from behind and in the direction of forward movement, the disks rotate towards each other, which with the placing and shaping of the shields 7,8 produces a spreading pattern called "broad spreading". Thus, each spreader disk ejects flowable material from the spreader vane (not shown) in a respective spreading sector 20,21 covering approximately 180°.

In the embodiments shown, the shields 7,8 are placed in the immediate vicinity of the respective spreader disks 3,4, covering a peripheral sector of approximately 180°. The part of each spreader disk being shielded is normally facing forward on the spreading apparatus, i.e. opposite to the rearwardly directed direction of ejection, and seen e.g. on the right-hand disk in Figure 1 in the region from 8 o'clock to 2 o'clock and on the left-hand disk in the region from 10 o'clock to 4 o'clock. The purpose of the shielding is, of course, to ensure, partly that the material is not spread inwardly against the spreading device itself, partly that the material is not being spread reciprocally over the spreader disks.

As mentioned above, the total spreading pattern becomes one of broad spreading, in which a large proportion of the material ejected rearwardly from the spreader disk overlaps in a large intermediate region within the two spreading sectors 20,21.

Figure 2 shows in principle the same spreading apparatus as shown in Figure 1, but in which the directions of rotation 5',6' are directed opposite to the directions of rotation 5,6 in Figure 1. With the shields 7,8 placed in the same manner as on the spreading apparatus according to Figure 1, the spreading apparatus according to Figure 2 provides a so-called "narrow spreading", in which the ejected flowable material from the two spreader disks lands in spreading sectors 22 and 23, having only a quite small overlap in the middle region between the two spreading sectors.

With these two types of spreading apparatuses it is normally possible to achieve different spreading patterns, at the same time being relatively homogeneous, uniform and symmetrical as seen in a plane at right angles to the direction of movement. Depending on the actual shape of the spreader disks and/or the spreader vanes it is possible to achieve varying spreading intensities, i.e. it is possible to achieve various distributions of the amounts being spread on the field, on which the material is ejected.

Figure 3 shows an example of a running-track plan with different spreading patterns, that can be achieved in a simple manner at different times during the spreading operation.

The designation 25 represents the distance between two running tracks, equal to the maximum throwing width for one spreader disk. Thus, the total spreading width is equal to twice the throwing width 25, and is designated 27. Otherwise, the Figure shows a normal field, on which the problematic region is the part close to a stream 31. It is e.g. possible to initiate the spreading of flowable material on the field with a spreading apparatus set for traditional broad spreading. Depending on which total profile, shown on section A-A with the reference number 30, is desired with regard to the quantity of fertilizer to be spread, it is possible in the example shown to switch to narrow spreading. Thus, the narrow spreading can continue in the long straight tracks, in which the use of the maximum spreading width is desired. In the non-critical transition regions shown between two running tracks it is possible to use either narrow spreading or broad spreading in a manner comprising the optional interruption of the supply of flowable material from the supply container to one of the spreader disks. In the critical marginal region 11 shown, i.e. close to the stream 31, where it is very important to reduce the risk of polluting the stream to the greatest possible extent, it is e.g. possible to switch the spreading apparatus to operate with narrow spreading with only one of the spreader disks, preferably the one most distant from the stream, so that an optimum spreading of flowable material is achieved. Alternatively, it could also be possible as shown to the right in Figure 3 to operate with broad spreading and then in this particular mode of operation to add an extra guide plate 32 for shielding and limiting the material being ejected, or the spreader vanes on the spreader disks concerned could be replaced with special edge-spreading vanes.

If the spreading apparatus is of the kind having a rotatable stirrer coupled to the shaft of and placed in the supply path of each spreader disk, and if the supply path to one of the disks is blocked, there is a risk that the stirrer concerned causes crushing or other damage to the flowable material present in the supply path concerned. This risk can be avoided, if each stirrer is connected through the respective shaft through a one-way clutch active solely in the direction of rotation, in which the spreader disk concerned rotates, as seen from behind, away from the other spreader disk. With this arrangement, the stirrer in the blocked path will not be driven and hence remain non-rotating. This arrangement is not shown in the drawing, but a person skilled in this art will know how to construct and operate it without further guidance from the present description.

### LIST OF PARTS

- 1: traction device
- 2: spreading apparatus
- 3: spreader disk
- 4: spreader disk
- 5: axis of rotation/direction of rotation
- 5': axis of rotation/direction of rotation
- 6: axis of rotation/direction of rotation
- 6': axis of rotation/direction of rotation
- 7: shield
- 8: shield
- 9: holding frame
- 11: critical marginal region
- 20: spreading sector
- 21: spreading sector
- 22: spreading sector
- 23: spreading sector
- 25: distance/throwing width
- 27: total spreading width
- 30: total profile
- 31: stream
- 32: guide plate

## Claims

1. Method of spreading flowable material on a surface, preferably for spreading fertilizer in granular or powder form on an earth surface, by means of a spreading apparatus being of the kind comprising a holding frame carrying a spreading device comprising at least two or more spreader disks each provided with at least one spreader vane, and being operated by a transmission device, wherein the frame also carries a container for storing and delivering a supply of the flowable material, **characterized in that** during the spreading operation a spreading device is used with at least two rotatable spreader disks which, preferably in pairs and optionally, may be set to rotate towards each other and away from each other or in the same direction, respectively.

2. Method according to claim 1, **characterized in that** the said rotatable spreader disks preferably rotate towards each other when used for broad spreading and away from each other when used for narrow spreading.

3. Method according to claim 1 or 2, **characterized in that** when used for edge spreading flowable material is optionally delivered from the said supply container to only one of the spreader disks being arranged in pairs.

4. Method according to claim 3, **characterized in that** the said rotatable spreader disks rotate away from each other or in the same direction when used for the said edge spreading.

5. Method according to claim 3 or 4, **characterized in that** when used for edge spreading flowable material is delivered to only the one of the spreader disks being closest to the edge spreading area.

6. Method according to claim 3 or 4, **characterized in that** when used for edge spreading flowable material is delivered to only the one of the spreader disks being most distant from the edge spreading area.

7. Method according to claim 6, **characterized in that** the one spreader disk mentioned is operated in the broad-spreading mode and that a guide plate is placed in the immediate vicinity of its periphery so as to limit the spreading on the side closest to the edge concerned.

8. Spreading apparatus for spreading flowable material on a surface according to the method mentioned in each of the claims 1 - 7, **characterized in that** the spreading apparatus (2) carries a spreading device comprising at least two rotatable spreader disks (3, 4), which, preferably in pairs and optionally, can be set to rotate towards each other (5, 6) and away from each other (5', 6') or in the same direction, respectively, by means of a shift mechanism reversing the direction of rotation of one or both of the spreader disks.

9. Apparatus according to claim 8, **characterized in that** the said shift mechanism is constituted by a transmission unit, which is connected with the existing transmission device either as an internal integral unit or as an external extra component.

10. Apparatus according to claim 8 or 9, **characterized in that** at least one of the spreader vanes is designed for both broad spreading and narrow spreading therein that the spreader vanes are integrated for broad spreading and narrow spreading, respectively.

11. Apparatus according to any one or any of the claims 8 - 10, **characterized in that** when used for edge spreading the spreader vanes are replaced with edge- spreading vanes, preferably on only the spreader disk to which flowable material is delivered.

12. Apparatus according to any one or any of the claims 8 - 11 , **characterized in that** the edge spreading is optimized by means of an additional adjustable guide plate (32) adapted to be placed in the immediate vicinity of the periphery of the spreader disk concerned.

13. Apparatus according to any one or any of the claims 8 - 12 and of the kind having a rotatable stirrer coupled to the shaft or and placed in the supply path of each spreader disk (3, 4), **characterized in that** each stirrer is connected through the respective shaft through a one-way clutch active solely in the direction of rotation, in which the spreader disk concerned rotates, as seen from behind, away from the other spreader disk.

## Patentansprüche

1. Verfahren zum Streuen von schüttbarem Material auf eine Fläche, vorzugsweise zum Streuen eines Düngemittels in körniger oder Pulverform auf eine Bodenfläche, mittels einer Streuvorrichtung, die von der Art ist, die einen Halterahmen aufweist, der eine Streueinrichtung mit mindestens zwei oder mehr Streuscheiben trägt, die jeweils mit mindestens einem Streublatt versehen sind, und die durch eine Getriebeeinrichtung betätigt wird, wobei der Rahmen auch einen Behälter zum Aufnehmen und Abgeben eines Vorrats an schüttbarem Material trägt, **dadurch gekennzeichnet, daß** während des Streuvorgangs eine Streueinrichtung mit mindestens zwei drehbaren Streuscheiben verwendet wird, die, vorzugsweise paarweise oder als Wahlmöglichkeit, so eingestellt werden können, daß sie sich zueinander und voneinander weg bzw. in der gleichen Richtung drehen.

2. Verfahren nach Anspruch 1, **dadurch gekennzeichnet, daß** die drehbaren Streuscheiben sich vorzugsweise bei Verwendung für Breitstreuung zueinander und bei Verwendung für Schmalstreuung voneinander weg drehen.

3. Verfahren nach Anspruch 1 oder 2, **dadurch gekennzeichnet, daß** bei Verwendung für Randstreuung schüttbares Material als Wahlmöglichkeit aus dem Vorratsbehälter an nur eine der paarweise angeordneten Streuscheiben abgegeben wird.

4. Verfahren nach Anspruch 3, **dadurch gekennzeichnet, daß** die drehbaren Streuscheiben sich bei Verwendung für die Randstreuung voneinander weg oder in der gleichen Richtung drehen.

5. Verfahren nach Anspruch 3 oder 4, **dadurch gekennzeichnet, daß** bei Verwendung für Randstreuung schüttbares Material nur an die eine der paarweise angeordneten Streuscheiben abgegeben wird, die dem Randstreubereich am nächsten ist.

6. Verfahren nach Anspruch 3 oder 4, **dadurch gekennzeichnet, daß** bei Verwendung für Randstreuung schüttbares Material nur an die eine der paarweise angeordneten Streuscheiben abgegeben wird, die vom Randstreubereich am weitesten entfernt ist.

7. Verfahren nach Anspruch 6, **dadurch gekennzeichnet, daß** die eine genannte Streuscheibe im Breitstreumodus betrieben wird und daß eine Führungsplatte in unmittelbarer Nähe ihres Umfangs angeordnet ist, um die Streuung auf der Seite zu begrenzen, die dem betreffenden Rand am nächsten ist.

8. Streuvorrichtung zum Streuen von schüttbarem Material auf eine Fläche nach dem Verfahren nach jedem der Ansprüche 1 bis 7, **dadurch gekennzeichnet, daß** die Streuvorrichtung (2) eine Streueinrichtung mit mindestens zwei drehbaren Streuscheiben (3, 4) trägt, die, vorzugsweise paarweise und als Wahlmöglichkeit, so eingestellt werden können, daß sie sich zueinander (5, 6) und voneinander weg bzw. in der gleichen Richtung drehen, und zwar mittels eines Umschaltmechanismus, der die Drehrichtung einer oder beider Streuscheiben umkehrt.

9. Vorrichtung nach Anspruch 8, **dadurch gekennzeichnet, daß** der Umschaltmechanismus aus einer Getriebeeinheit besteht, die mit der vorhandenen Getriebeeinrichtung entweder als innere integrierte Einheit oder als äußerer Extrabestandteil verbunden ist.

10. Vorrichtung nach Anspruch 8 oder 9, **dadurch gekennzeichnet, daß** mindestens eines der Streublätter sowohl für Breit- als auch für Schmalstreuung insofern geeignet ist, als die Streublätter für Breit- bzw. Schmalstreuung integriert sind.

11. Vorrichtung nach einem der Ansprüche 8 bis 10, **dadurch gekennzeichnet, daß** bei Verwendung für Randstreuung die Streublätter durch Randstreublätter ersetzt werden, vorzugsweise nur an der Streuscheibe, an die schüttbare Materialien abgegeben werden.

12. Vorrichtung nach einem der Ansprüche 8 bis 11, **dadurch gekennzeichnet, daß** die Randstreuung mittels einer zusätzlichen verstellbaren Führungsplatte (32) optimiert ist, die in unmittelbarer Nähe des Umfangs der betreffenden Streuscheibe angeordnet werden kann.

13. Vorrichtung nach einem der Ansprüche 8 bis 12 und von der Art, die ein drehbares Rührwerk aufweist, das mit der Welle jeder Streuscheibe (3, 4) gekoppelt und auf deren Zuleitungsweg angeordnet ist, **dadurch gekennzeichnet, daß** jedes Rührwerk über die jeweilige Welle über eine Freilaufkupplung verbunden ist, die nur in der Drehrichtung aktiv ist, in der sich die betreffende Streuscheibe, von hinten gesehen, von der anderen Streuscheibe weg dreht.

## Revendications

1. Procédé d'épandage d'une matière fluide sur une surface, de préférence d'épandage d'un engrais sous forme granulaire ou de poudre sur une surface de sol, à l'aide d'un appareil d'épandage qui est d'un type qui comprend un châssis de support qui porte un dispositif d'épandage comprenant au moins deux disques d'épandage munis chacun d'au moins une palette d'épandage, et commandé par un dispositif de transmission, le châssis portant aussi un récipient de stockage et de transmission d'une réserve de matière fluide, **caractérisé en ce que**, pendant l'opération d'épandage, un dispositif d'épandage est utilisé avec au moins deux disques rotatifs d'épandage qui, de préférence par paires, et éventuellement, peuvent être mis en rotation l'un vers l'autre, en s'écartant l'un de l'autre ou dans le même sens respectivement.

2. Procédé selon la revendication 1, **caractérisé en ce que** les disques rotatifs d'épandage tournent de préférence l'un vers l'autre lors d'une utilisation pour un épandage large et en s'écartant l'un de l'autre lors d'une utilisation pour un épandage étroit.

3. Procédé selon la revendication 1 ou 2, **caractérisé en ce que**, lors de l'utilisation pour un épandage latéral, la matière fluide est transmise éventuellement par le récipient d'alimentation à un seul des disques d'épandage qui sont disposés par paires.

4. Procédé selon la revendication 3, **caractérisé en ce que** les disques rotatifs d'épandage tournent en s'écartant ou dans le même sens lorsqu'ils sont utilisés pour l'épandage latéral.

5. Procédé selon la revendication 3 ou 4, **caractérisé en ce que**, lors d'une utilisation pour un épandage latéral, la matière fluide est transmise à un seul des disques d'épandage qui est le plus proche de la zone d'épandage latéral.

6. Procédé selon la revendication 3 ou 4, **caractérisé en ce que**, lors d'une utilisation pour un épandage latéral, la matière fluide est transmise uniquement à celui des disques d'épandage qui est le plus éloigné de la zone d'épandage latéral.

7. Procédé selon la revendication 6, **caractérisé en ce que** le disque d'épandage précité est commandé en mode d'épandage large, et **en ce qu'**une plaque de guidage est placée à proximité immédiate de la périphérie afin qu'elle limite l'épandage du côté le plus proche du bord concerné.

8. Appareil d'épandage d'une matière fluide sur une surface par mise en oeuvre du procédé selon chacune des revendications 1 à 7, **caractérisé en ce que** l'appareil d'épandage (2) porte un dispositif d'épandage qui comprend au moins deux disques rotatifs d'épandage (3, 4) qui, de préférence par paires et éventuellement, peuvent être réglés afin qu'ils tournent l'un vers l'autre (5, 6) et en s'écartant l'un de l'autre (5', 6') ou dans le même sens respectivement, à l'aide d'un mécanisme d'inversion du sens de rotation de l'un au moins des disques d'épandage.

9. Appareil selon la revendication 8, **caractérisé en ce que** le mécanisme d'inversion est constitué par une unité de transmission qui est raccordée au dispositif existant de transmission, soit sous forme d'une unité interne intégrée, soit sous forme d'un élément extérieur supplémentaire.

10. Appareil selon la revendication 8 ou 9, **caractérisé en ce que** l'une au moins des ailettes d'épandage est réalisée afin qu'elle assure à la fois l'épandage large et l'épandage étroit, et les ailettes d'épandage sont intégrées afin qu'elles assurent un épandage large et un épandage étroit respectivement.

11. Appareil selon l'une quelconque des revendications 8 à 10, **caractérisé en ce que**, lors d'une utilisation pour un épandage latéral, les ailettes d'épandage sont remplacées par des ailettes d'épandage latéral, de préférence uniquement sur le disque d'épandage auquel la matière fluide est transmise.

12. Appareil selon l'une quelconque des revendications 8 à 11, **caractérisé en ce que** l'épandage latéral est optimisé à l'aide d'une plaque supplémentaire réglable de guidage (32) destinée à être placée à proximité immédiate de la périphérie du disque d'épandage concerné.

13. Appareil selon l'une quelconque des revendications 8 à 12, du type ayant un agitateur rotatif couplé à l'arbre de chaque disque d'épandage (3, 4) et placé dans le trajet d'alimentation de ce disque, **caractérisé en ce que** chaque agitateur est raccordé par l'arbre respectif et un embrayage à roue libre qui n'agit que dans le sens de rotation, et dans lequel le disque d'épandage concerné tourne en s'écartant de l'autre disque d'épandage, lorsqu'il est vu de l'arrière.
